# EUROPEAN PATENT SPECIFICATION

(11) **EP 3 891 598 B1**
(45) Date of publication and mention of the grant of the patent: **28.01.2026**
(21) Application number: 19892040.7
(22) Date of filing: 05.12.2019
(51) Int. Cl.: G06F 3/16, H04N 21/472, G06F 16/60, H04R 3/12, H04L 12/28, G10L 15/22, H04N 21/422, H04N 21/81

(54) **VIRTUAL MEDIA SERVICE**
VIRTUELLER MEDIENDIENST
SERVICE MULTIMÉDIA VIRTUEL

(30) Priority: 06.12.2018 US 201862775981 P
(43) Date of publication of application: 13.10.2021
(73) Proprietor: D&M Holdings, Inc., Kawasaki-shi, Kanagawa 210-8569 (JP)
(72) Inventor: WACHTER, Martin Richard, North Phoenix, Maryland 21131 (US); KILGORE, Robert M., Brooklyn, New York 11249 (US)
(74) Representative: Mewburn Ellis LLP
(86) International application number: PCT/US2019/064639
(87) International publication number: WO 2020/118026

(56) References cited:
- WO-A1-2018/046982
- US-A1- 2005 246 739
- US-A1- 2012 117 026
- US-A1- 2014 157 329
- US-A1- 2016 014 457
- US-A1- 2017 242 649
- US-A1- 2018 336 905

## Description

### CROSS-REFERENCE TO RELATED APPLICATIONS

This application claims the benefit of U.S. Provisional Patent Application serial number 62/775,981, filed December 6, 2018, entitled "Virtual Media Service ".

### FIELD OF THE INVENTION

The present invention relates to a media rendering system, and more particularly, is related to voice commands for a media rendering system.

### BACKGROUND OF THE INVENTION

Voice initiated playback of digital media is one of the most used features of the commercially available voice agents like Alexa, Siri, and Google Assistant, however the customer is limited to playback of only the digital media services offered by the developer of each voice agent. For example, in the United States Alexa is limited to Amazon Music, Pandora, Spotify, Sirius XM, TuneIn, Deezer, iHearRadio, and Gimmie Radio. Google's Assistant is limited to playback of YouTube Music, Google Play Music, Pandora, and Deezer. Apple's Siri is limited to playback of Apple Music.

Developers of commercially available media rendering devices, for example, so called "smart speakers," have incorporated these voice agents into their products or systems allowing the customer to select and render media on many more media services than the voice agent developers allow. Furthermore, it is difficult if not impossible for some voice agents to access media services which are owned by a competing agent. For example, as of this writing, Amazon Alexa customers cannot access Google Play media. In addition, some media may be available on one media service (possibly due to licensing restrictions) and not another.

Customers, on the other hand, want choice and expect to be able to access any of their media sources from any voice agent. The customer wants to access and play the requested media regardless of the native capabilities of their smart speaker's voice agent and without having prior knowledge about any licensing arrangements regarding which services offered media by which artists.
A decision of a customer to purchase a smart speaker is currently limited to what media services are offered by the device manufacturer instead of purchasing a speaker based on its sound qualities, aesthetics, or other criteria. Therefore, there is a need in the industry to address one or more of these shortcomings.
US 2017/242649 A1 discloses a music service selection. US 2018/336905 A1 discloses a far-field extension for digital assistant services. US 2005/246739 A1 discloses a mechanism for exposing a single directory of content available from a plurality of content providers, to a plurality of video and audio player devices.

### SUMMARY OF THE INVENTION

The present disclosure relates to a virtual music service. In a first aspect, there is provided a method for assessing a media program from a media service according to claim 1. In a second aspect, there is provided a virtual media service according to claim 14.

Other systems, methods and features of the present invention will be or become apparent to one having ordinary skill in the art upon examining the following drawings and detailed description.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principals of the invention.
FIG. 1 is a schematic diagram showing a voice agent interacting with a smart media player without a virtual media service.
FIG. 2 is a schematic diagram showing a first exemplary embodiment of a system having a smart media player accessing a media service through a voice agent via a virtual media service.
FIG. 3 is a schematic diagram with details of the virtual media service of FIG. 2.
FIG. 4 is a schematic diagram with details of a second exemplary embodiment of the virtual media service of FIG. 2.
FIG. 5 is a schematic diagram illustrating an example of a system for executing functionality of the present invention.
FIG. 6 is a flowchart of an exemplary first method for accessing a media program from a media service of a plurality of aggregated media services by a voice agent.
FIG. 7 is a flowchart of an exemplary second method for accessing a media program from a media service of a plurality of aggregated media services by a voice agent.
FIG. 8 is a diagram of how an existing voice service is implemented without a virtual media service.
FIG. 9 is a diagram of how the existing voice service is implemented using the virtual media service under the first embodiment.
FIG. 10 is a schematic diagram showing an alternative exemplary embodiment of a system having a voice agent enabled device receiving a command to route results of a music request to a separate media player.

### DETAILED DESCRIPTION

The following definitions are useful for interpreting terms applied to features of the embodiments disclosed herein, and are meant only to define elements within the disclosure.

The following definitions are useful for interpreting terms applied to features of the embodiments disclosed herein, and are meant only to define elements within the disclosure.

As used within this disclosure, a "voice agent" is a service or a device that receives a voice utterance (for example, an audio stream), parses the voice utterance into a command, and executes the command. Examples of a voice agent include Alexa, Siri, and Google Assistant, among others.

As used within this disclosure, a "smart media player" is a device configured to render digital media from a plurality of media sources. The media sources, for example, media services, are typically external to the smart media player, for example, in communication with the smart media player via a communication network. The media sources generally transmit a media stream to the smart media player (herein referred to as "streaming"). Within this disclosure, the terms "smart media player" and "media rendering device" are used interchangeably.

As used within this disclosure, "media" generally refers to audio, video, or audio synchronized with video. A media stream refers to a digital transmission of a live or recorded media program provided ("streamed") via a communication network. The media stream may be associated with metadata related to the media stream, for example, providing information regarding the content of the media stream, listing credits of individuals involved with producing the media being streamed, artwork music lyrics, reviews, promotional material, and other related data.

As used within this disclosure, "rendering" refers to converting a media stream into audio and/or video. This is also referred to as media playback.

As used within this disclosure, an "application program interface (API)" may be thought of as a protocol translator. An API is a set of routines, protocols, and tools for different network elements to communicate with one another. Specifically, a voice agent media service API is an API that allows a voice agent to interact with a particular media service, and a voice media service (VMS) media service API is an API that allows the virtual media service to interact with a media service. Likewise, the virtual media service may interact with a particular voice agent via a voice agent API.

As used within this disclosure, a "skill" is a software interface provided between a voice assistant and a cloud based music service. The skill may be associated with an API.

Reference will now be made in detail to embodiments of the present invention, examples of which are illustrated in the accompanying drawings. Wherever possible, the same reference numbers are used in the drawings and the description to refer to the same or like parts.

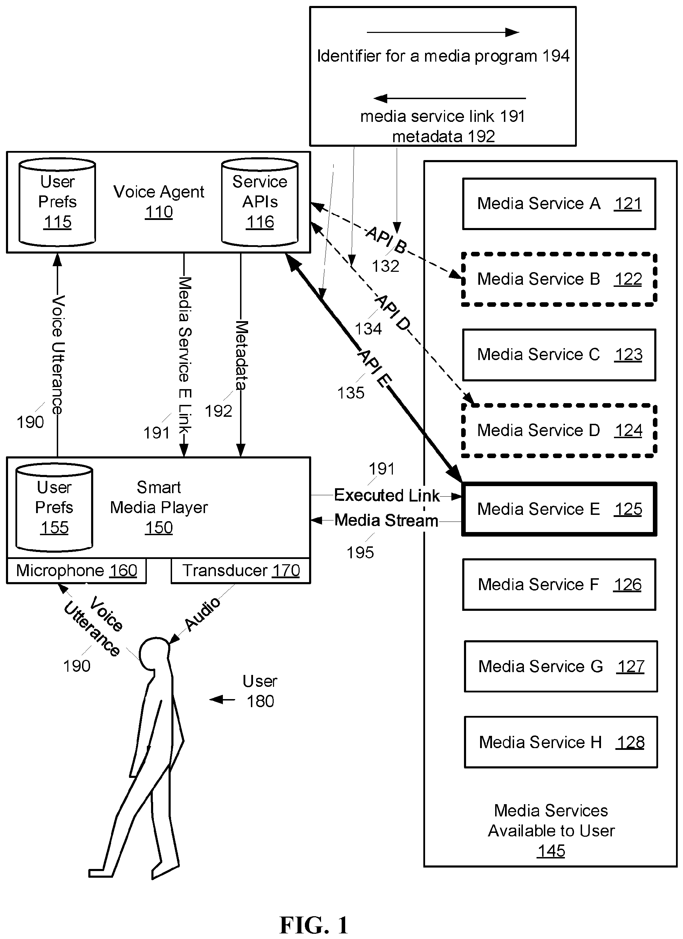

As shown by FIG. 1, a smart media player 150 is configured to render media according to user commands. User commands may be received via a graphical user interface (not shown), or by voice commands. The voice command capability may be provided by a voice agent 110. For exemplary purposes, it is assumed that a user 180 owns the smart media player 150 and/or has configured the smart media player 150 to render media according to a plurality of smart media player user preferences 155.

The smart media player 150 includes a microphone 160 to detect a voice utterance 190 from the user 180. The smart media player 150 conveys the voice utterance 190 to the voice agent 110, for example, in the form of an audio stream. The voice agent 110 receives the voice utterance 190 and parses the voice utterance 190 to formulate the voice utterance 190 into a command descriptor or directive for execution. The command descriptor may be thought of as a description of the desired action to be executed. For purposes of this disclosure, the command descriptor is assumed to be a request to search for, select and/or render digital media. The voice agent 110 may have a plurality of voice agent user preferences 115 distinct from the smart media player user preferences 155. The voice agent 110 may be integral to the smart media player 150, or may be external to the smart media player 150, for example, the smart media player 150 may be resident in the cloud and accessed via a communication network.

The voice agent 110 communicates with a media service via an application program interface (API). In general, the voice agent 110 has a separate API tailored to each media service, for example, a media service API stored in a voice agent media service API store 116. Therefore, the voice agent 110 may typically only have an API for a subset of media services 122, 124, 125 of a set 145 media services available to the user 121-128. As shown by FIG. 1, the voice agent 110 has a first API 132 for media service B 122, a second API 134 for media service D 124, and a third API 135 for media service E 125. The user 180 configures the voice agent 110 to select media from a default media service, for example, a default media service identified in the voice agent user preferences 115. For example, the default media service shown in FIG. 1 is media service E 125, shown outlined with a dark solid line. Media service B 122 and media service D 124 are non-default media services, indicated by a dark dashed outline. Media services 121, 123, 126-128 (shown with a plain solid line outline) indicate media services available to the user with no API for the voice agent 110.

For example, the voice agent 110 has APIs for N music services. For the example shown by FIG. 1, N=3 and the N music services are Media Service B 122, Media Service D, 124, and Media Service E 125. The user 180 may configure the voice agent 110 to use any or all of these N music services by creating and logging into accounts for each of the N music services. The voice utterance 190 of the user 180 may select one or more of these N music services to handle requests for catalog music ("play song X from band Y") or stations ("play some jazz"). Each of the N music services has an API for the voice agent 110. In addition, there are M other music services (not of the N music services) with no API available to the voice agent 110 which are not accessible to the native voice agent 110. For the example shown by FIG. 1, M=5 and the M music services are Media Service A 121, Media Service C, 123, Media Service F 126, Media Service G 127, and Media Service H 128. It should be noted the M other music services typically each have an API, that are not included in the service APIs 116 stored by the voice agent 110 associated with the smart media player 150.

The voice agent 110 selects a media service, which in general is the default media service E 125 unless otherwise indicated by the voice utterance 190. The voice agent 110 converts the voice utterance 190 into a command descriptor according to the provided media services API, in this case API E 135 for media service E 125. The command descriptor includes an identifier for a media program 194 based upon the voice utterance 190. In general, the voice agent 110 executes a command to select media from the user selected (default) media service only, in this case media service E 125. Via the API 135, the voice agent 110 provides an identifier for a media program 194 to the default media service 125. If the selected media is available from the default media service (media service E 125), the default media service 125 provides the voice agent 110 with a link 191 to the selected media on the default media service 125 via the default media service API 135.

The default media service 125 may also provide the voice agent 110 with metadata 192 related to the selected media via the default media service API 135. For example, if the selected media is an audio recording, the metadata 192 may include the name of the recording artist, the song title, the album name, the recording label, the recording date, an image of the album cover, and/or other information associated with the audio recording.

The voice agent 110 provides the link 191 to the selected media on the default media service 125 and the metadata 192 to the smart media player 150. The smart media player 150 may then access the selected media from the default media service 125 via the link 191. For example, executing the link 191 may cause media service E 125 to stream the selected media to the smart media player 150 via a media stream 195. The smart media player 150 renders the media stream 195, for example, via an audio transducer 170 and/or a video display (not shown).

If the selected media is not available from the default media server 125, the default media server 125 indicates this to the voice agent 110 via the API, for example, via an error message. The voice agent 110 may then convey an audio message to the smart media player 150 which, when rendered as audio by the smart media player 150, informs the user 180 that the voice command failed. For example, the audio of the error message may say, "sorry, I couldn't find that song."

In the event of such a failure, the user 180 may choose to change the voice agent user preferences 115 to a different default media service. Alternatively, the user may utter a subsequent voice utterance that directs the voice agent 110 to query a non-default media service, for example Media Service B 122, or Media Service 125. However, this may be cumbersome and time consuming, as well as frustrating to the user 180 who may be aware that the selected media is available on another of the media services available to the user 180.

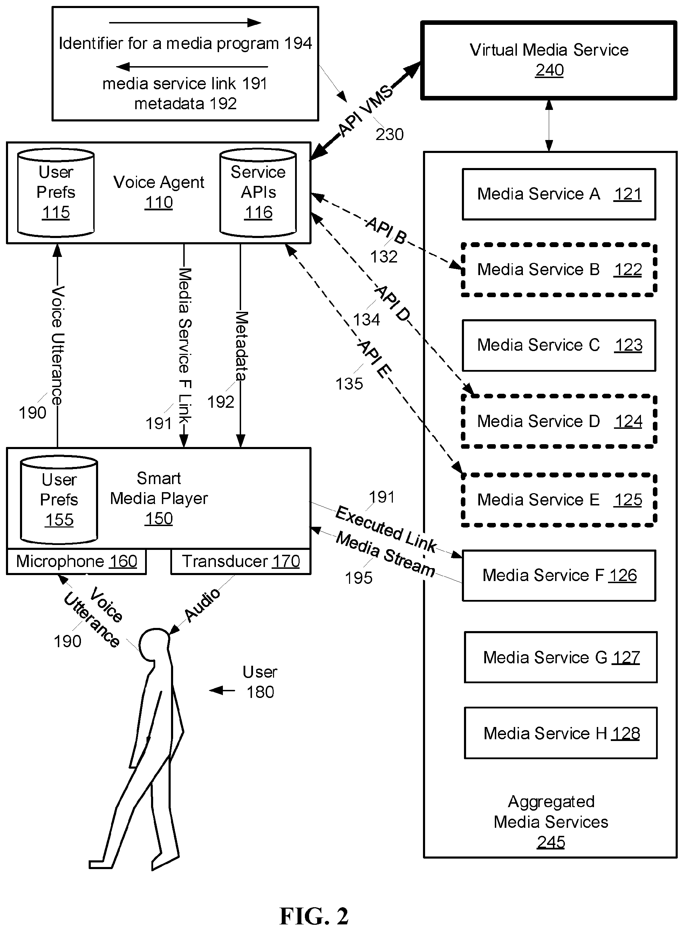

As shown by FIG. 2, a first exemplary embodiment of the present invention includes a virtual media service (VMS) 240 that improves the user experience for accessing, searching and playing media via the voice agent 110 by aggregating all of the media services available to the user 180 into an aggregated collection of media services 245 that has access to many more media services and that is accessible from any voice agent 110. The virtual media service 240 may be built on the native platform of the voice agent 110 to appear to be a single media service 121-128 while having back-end access to the aggregated collection of media services 245. The result is the user 180 can verbally ask to play media from any of the aggregated media services 245 regardless of what voice agent 110 and smart media player 150 brand they are using to request media, and without naming the specific media service 121-128. The VMS 240 provides a more accurate search result across the aggregated media services 245 compared the results from a single media service. Advantageously, with the VMS 240 the user 180 does not have to purchase different smart media players 150 with different voice agents 110 based upon what media services 121-128 the voice agent 110 can access.

As described previously regarding FIG. 1, the voice agent 110 under the first embodiment of FIG. 2 is likewise configured to respond to a voice utterance 190 directed to an interaction with a media service 122, 124,125 by selecting a single default media service identified in the voice agent user preferences 115, and interacting with the default media service via an API associated with the default media service. Under the first embodiment, as shown by FIG. 2, the virtual media service 240 is used to access media from any media service 121-128 of the plurality of aggregated media services 245.

The voice agent 110 is configured via the voice agent user preferences 115 to select the virtual media service 240 as the default media service, and to access the VMS 240 via a virtual media service API 230. The virtual media service API 230 for the virtual media service 240 preferably has identical or similar inputs and outputs to the voice agent APIs 132, 134, 135 for individual media services 122, 124, 125, for example, receiving as input an identifier for a media program 194 and returning access to the media program, such as a media service link 191 and metadata 192. The virtual media service API 230, like the voice agent media service APIs 132, 134, 135 may also include additional inputs and outputs, for example, user permission data, audio formats, desired streaming data rates, and a media service identifier, among others.

As a result, the VMS 240 interacts with the voice agent 110 via the VMS API 230 in the same or similar manner as an individual media service 122, 124, 125 would interact with the voice agent 110 via an individual media service API 132, 134, 135. Like the individual media service APIs 132, 134, 135, the VMS API 230 provides an identifier for a media program 194 via the VMS 240. Like the individual media service APIs 132, 134, 135, the voice agent receives access to the media program, for example, the link 191 to the selected media on the default media service 125 and the metadata 192 from the VMS API 230. However, instead of providing access to just one media service of the media services 122, 124, 125 that have individual voice agent media service APIs 132, 134, 135, the virtual media service 240 provides access to all media services 121-128 of the aggregated media services 245, even the individual media services 121, 123, 126-128 that do not have an individual voice agent media service API.

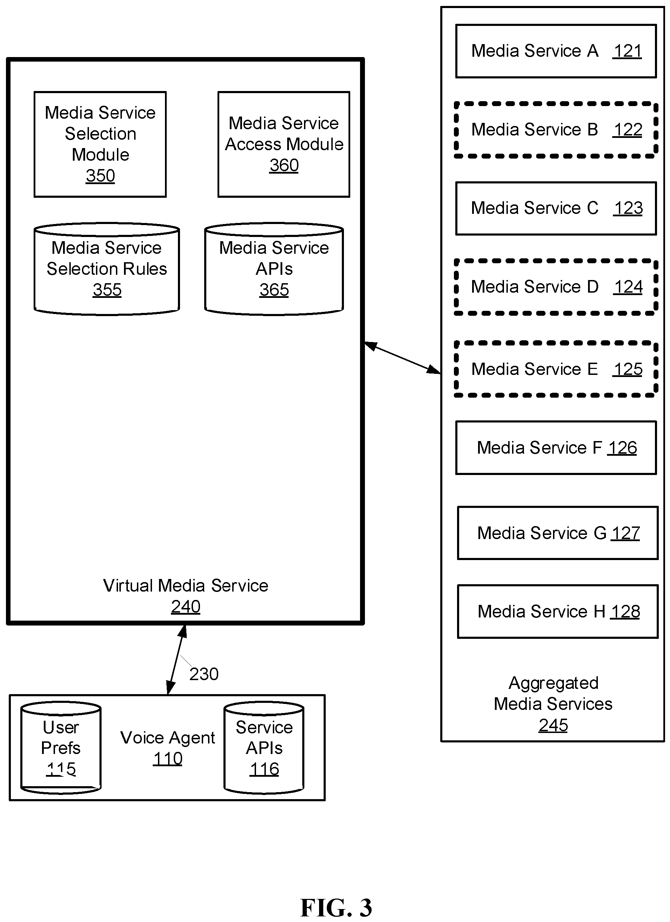

FIG. 3 shows a detail of the virtual media service 240 under the first embodiment. The virtual media service 240 may be implemented, for example by a server (not shown) in communication with the voice agent 110 and the aggregated media services 245 via a communication network. For example, the virtual media service 240 may be implemented as a cloud server.

Functionality provided by the virtual media service 240 may be executed by one or more modules 350, 360. In general, this functionality includes selecting a media service 121-128 from the aggregated media services 245, and formulating messages to send to the selected media service and interpreting messages received from the selected media service.

The virtual media system 240 includes a media service selection module 350 that prioritizes media services 121-128 of the aggregated media services 245 for search and rank order the results based on rules, for example, via user preferences stored in a media service selection rules store 355, and/or by rules that take commercial considerations into account, for example, agreements between the VMS developers and individual media services. The media service selection module 350 may concurrently or sequentially select a first media service 121 having the highest priority preference and then attempt to obtain the selected media from the first media service 121. If the selected media is not available from the first media service, the media service selection module 350 may select a second media service 122 having the second highest priority preference. This process may continue, for example, selecting a third, fourth, fifth highest priority preference (and so on) until a media service is found that can provide the selected media.

The virtual media service 240 includes a VMS media service API for each media service 121-128 of the aggregated media services 245, stored in a VMS media services API store 365. Each VMS media service API is configured to allow the virtual media service 240 to interact with a particular media service 121-128 of the aggregated media services 245.

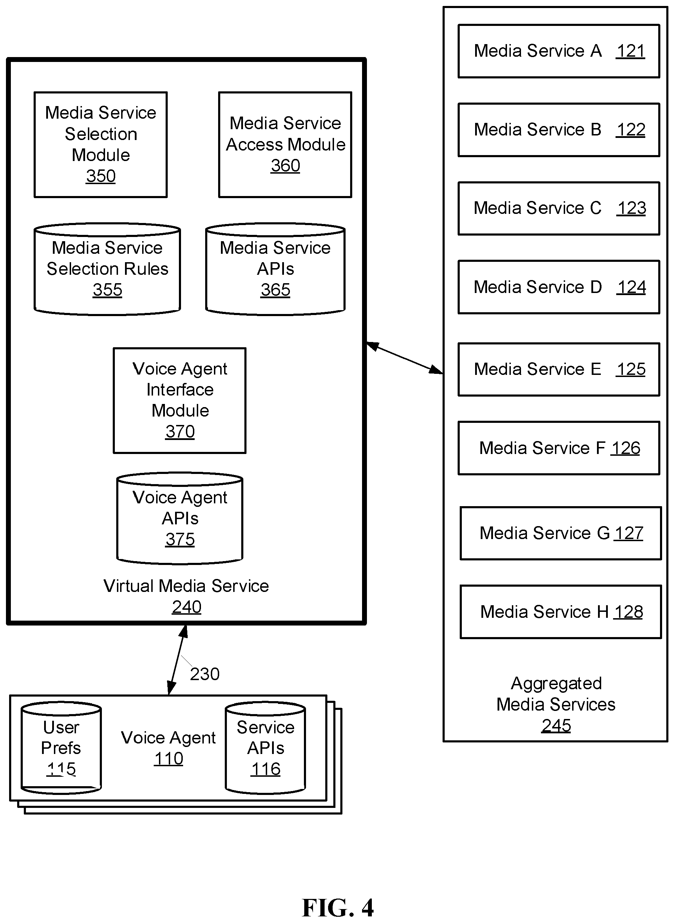

Under a second embodiment, shown in FIG. 4, the virtual media service 240 is configured to interact with more than one type of voice agent 110, for example, with voice agents 110 such as Siri, Alexa, and Google Assistant from different developers. In order to interact with different types of voice agents 110, the virtual media service 240 includes a store of voice agent APIs 375, where each voice agent API in the store of voice agent APIs 375 is configured to process messages between the virtual media service 240 and the voice agent 110. A voice agent interface module 370 may receive a message from the voice agent 110 and identify the voice agent 110. The voice agent interface module 370 selects a voice agent API associated with the voice agent 110 from the store of voice agent APIs 375. The voice agent interface module 370 may identify the voice agent 110 based on, for example, a recognized message format, a recognized message address, and/or via a handshake protocol, among other methods.

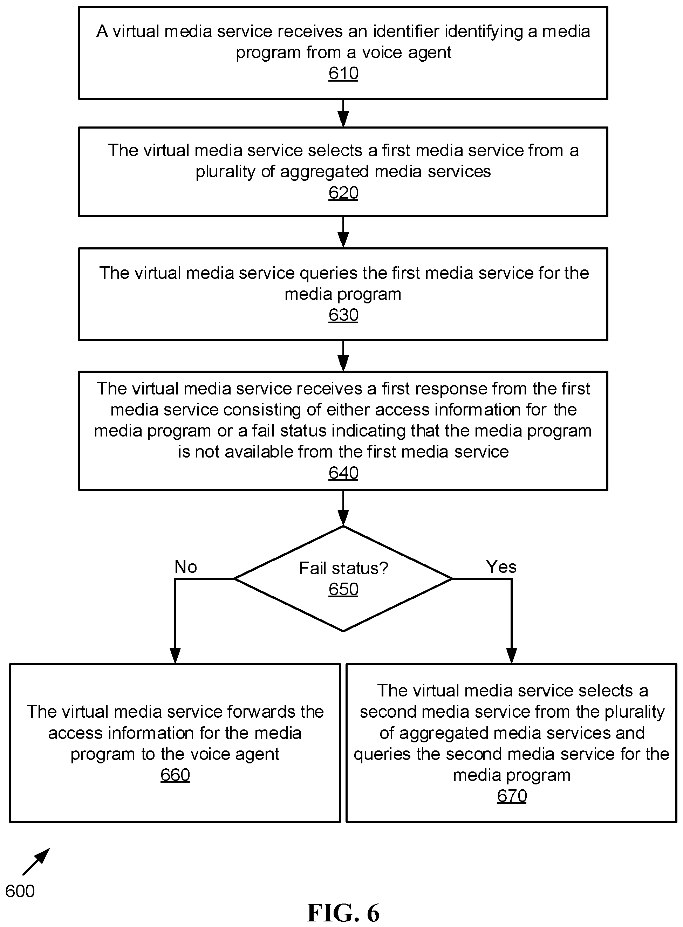

FIG. 6 is a flowchart of a first exemplary method for accessing a media program from a media service of a plurality of aggregated media services by a voice agent. It should be noted that any process descriptions or blocks in flowcharts should be understood as representing modules, segments, portions of code, or steps that include one or more instructions for implementing specific logical functions in the process, and alternative implementations are included within the scope of the present invention in which functions may be executed out of order from that shown or discussed, including substantially concurrently or in reverse order, depending on the functionality involved, as would be understood by those reasonably skilled in the art of the present invention. The method is described with reference to FIG. 2.

A virtual media service 240 receives an identifier for a media program 194 from a voice agent 110, as shown by block 610. The virtual media service 240 selects a first media service 126 from a plurality of aggregated media services 245, as shown by block 620. The first media service 126 is selected according to a ranking of media services 121-128 of the aggregated media services 245 as per a plurality of media service selection rules 355 (FIG. 3). The virtual media service 240 queries the first media service 121 for the media program, as shown by block 630. The virtual media service 240 receives a first response from the first media service 126 having either access information for the media program or a fail status indicating that the media program is not available from the first media service 126, as shown by block 640. For example, the access information for the media program may include a media service link 191 and/or metadata 192.

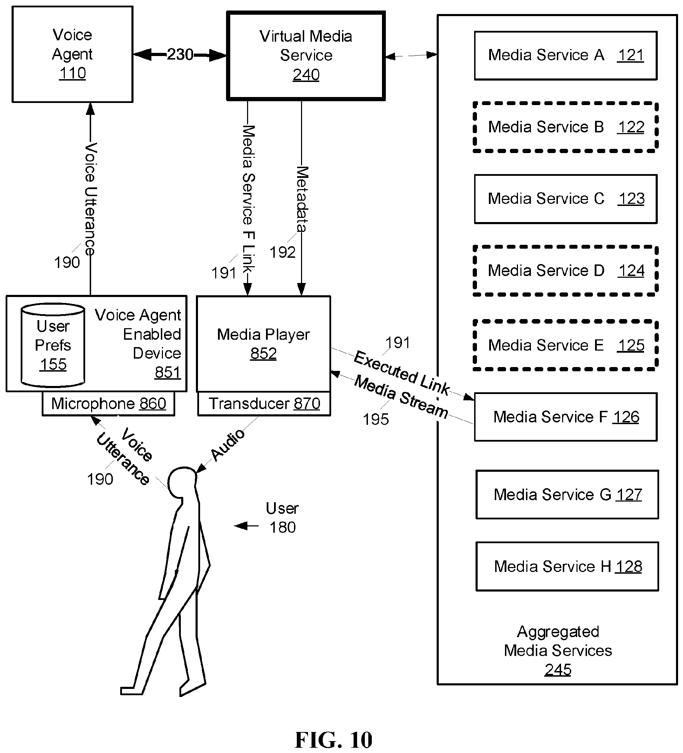

If the first response is a fail status, as shown by block 650, the virtual media service 240 selects a second media service 122 from the plurality of aggregated media services and queries the second media service 122 for the media program, as shown by block 670. If the first response is not a fail status, as shown by block 650, the virtual media service 240 forwards the access information (link) for the media program 191 and metadata 192, for example, to the voice agent 110, as shown by block 660. Alternatively, the access information may instead/in addition be forwarded to a media player 852 (FIG. 10).

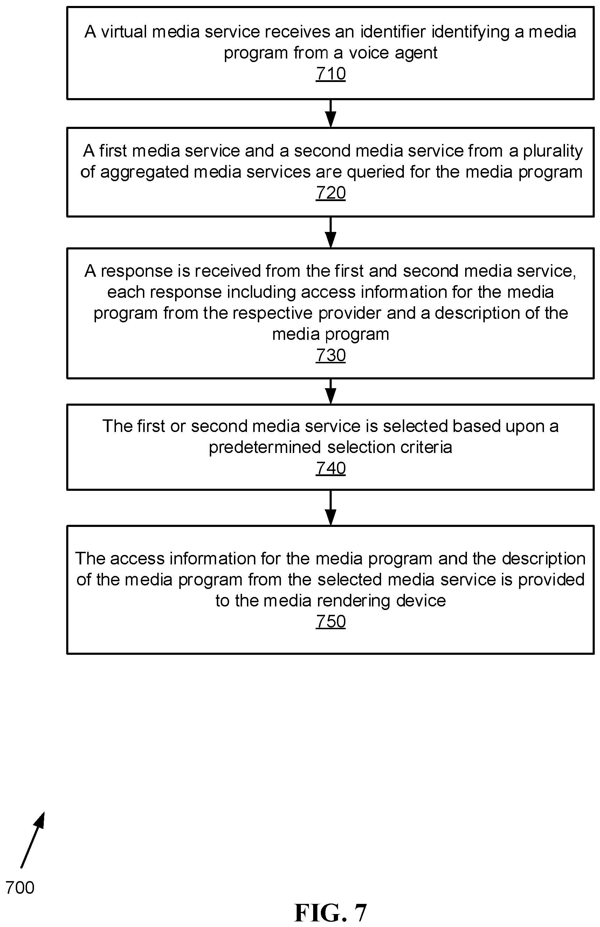

While FIG. 6 depicts a serial search, alternative embodiment may implement other search techniques, for example, parallel searches of two or more media service providers. FIG. 7 is a flowchart of a second exemplary method for accessing a media program from a media service of a plurality of aggregated media services by a voice agent.

An identifier for the media program is received from the voice agent 110, as shown by block 710. A first media service 121 and a second media service 122 from the plurality of aggregated media services 245 are queried for the media program, as shown by block 720. A response is received from the first media service 121 and the second media service 122, each response including access information such as a link 191 for the media program and a description 192 of the media program, as shown by block 730. The first media service 121 or the second media service 122 is selected based on a predetermined selection criteria, as shown by block 740. For example, the selection of the first media service 121 or the second media service 122 may be selected according to a ranking of media services 121-128 of the aggregated media services 245 as per a plurality of media service selection rules 355 (FIG. 3). The access information/link 191 for the media program and the description 192 of the media program from the selected media service is provided to the smart media player 150, as shown by block 750.

While FIG. 7 describes querying two media services, the process may be extended to querying any of one to all of the available media services of the aggregated media services 245. Not all responses to queries may be received at the same time. There may be various criteria for choosing to select a returned response or choosing to wait for additional responses. For example, the selection of a media service provider may be based on a response that meets specified design rules, such as preferring responses returned that include a playlist returned with over five songs in it, or the response offering the highest available quality media (e.g., sample rate or screen resolution) for high-end media renderers, or low bandwidth versions when rendering the media on a band limited device and/or small screen/speaker device, such as a phone.

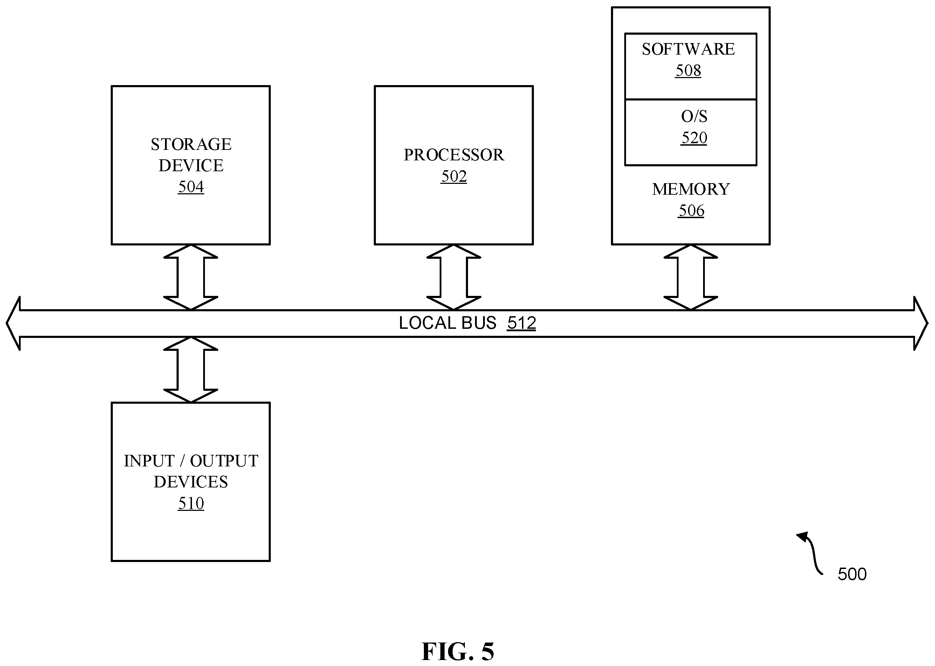

As previously mentioned, the present system for executing the functionality described in detail above may be a server or a computer, an example of which is shown in the schematic diagram of FIG. 5. The system 500 contains a processor 502, a storage device 504, a memory 506 having software 508 stored therein that defines the abovementioned functionality, input and output (I/O) devices 510 (or peripherals), and a local bus, or local interface 512 allowing for communication within the system 500. The local interface 512 can be, for example but not limited to, one or more buses or other wired or wireless connections, as is known in the art. The local interface 512 may have additional elements, which are omitted for simplicity, such as controllers, buffers (caches), drivers, repeaters, and receivers, to enable communications. Further, the local interface 512 may include address, control, and/or data connections to enable appropriate communications among the aforementioned components. While FIG. 5 shows a local bus 512 for simplicity, persons having skill in the art will recognize that rather than the components being on the same local bus 512, they can be connected via the cloud acting in a bridge mode to connect two or more different networks located apart from one another.

The processor 502 is a hardware device for executing software, particularly that stored in the memory 506. The processor 502 can be any custom made or commercially available single core or multi-core processor, a central processing unit (CPU), an auxiliary processor among several processors associated with the present system 500, a semiconductor based microprocessor (in the form of a microchip or chip set), a microprocessor, or generally any device for executing software instructions.

The memory 506 can include any one or combination of volatile memory elements (*e.g*., random access memory (RAM, such as DRAM, SRAM, SDRAM, *etc*.)) and nonvolatile memory elements (*e.g.,* ROM, hard drive, tape, CDROM, *etc.*)*.* Moreover, the memory 506 may incorporate electronic, magnetic, optical, and/or other types of storage media. Note that the memory 506 can have a distributed architecture, where various components are situated remotely from one another, but can be accessed by the processor 502.

The software 508 defines functionality performed by the system 500, in accordance with the present invention. The software 508 in the memory 506 may include one or more separate programs, each of which contains an ordered listing of executable instructions for implementing logical functions of the system 500, as described below. The memory 506 may contain an operating system (O/S) 520. The operating system essentially controls the execution of programs within the system 500 and provides scheduling, input-output control, file and data management, memory management, and communication control and related services.

The I/O devices 510 may include input devices, for example but not limited to, a keyboard, mouse, scanner, microphone, *etc.* Furthermore, the I/O devices 510 may also include output devices, for example but not limited to, a printer, display, a transducer (speaker), *etc.* Finally, the I/O devices 510 may further include devices that communicate via both inputs and outputs, for instance but not limited to, a modulator/demodulator (modem; for accessing another device, system, or network), a radio frequency (RF) or other transceiver, a telephonic interface, a bridge, a router, or other device.

When the system 500 is in operation, the processor 502 is configured to execute the software 508 stored within the memory 506, to communicate data to and from the memory 506, and to generally control operations of the system 500 pursuant to the software 508, as explained above.

When the functionality of the system 500 is in operation, the processor 502 is configured to execute the software 508 stored within the memory 506, to communicate data to and from the memory 506, and to generally control operations of the system 500 pursuant to the software 508. The operating system 520 is read by the processor 502, perhaps buffered within the processor 502, and then executed.

When the system 500 is implemented in software 508, it should be noted that instructions for implementing the system 500 can be stored on any computer-readable medium for use by or in connection with any computer-related device, system, or method. Such a computer-readable medium may, in some embodiments, correspond to either or both the memory 506 or the storage device 504. In the context of this document, a computer-readable medium is an electronic, magnetic, optical, or other physical device or means that can contain or store a computer program for use by or in connection with a computer-related device, system, or method. Instructions for implementing the system can be embodied in any computer-readable medium for use by or in connection with the processor or other such instruction execution system, apparatus, or device. Although the processor 502 has been mentioned by way of example, such instruction execution system, apparatus, or device may, in some embodiments, be any computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the processor or other such instruction execution system, apparatus, or device.

Such a computer-readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

In an alternative embodiment, where the system 500 is implemented in hardware, the system 500 can be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

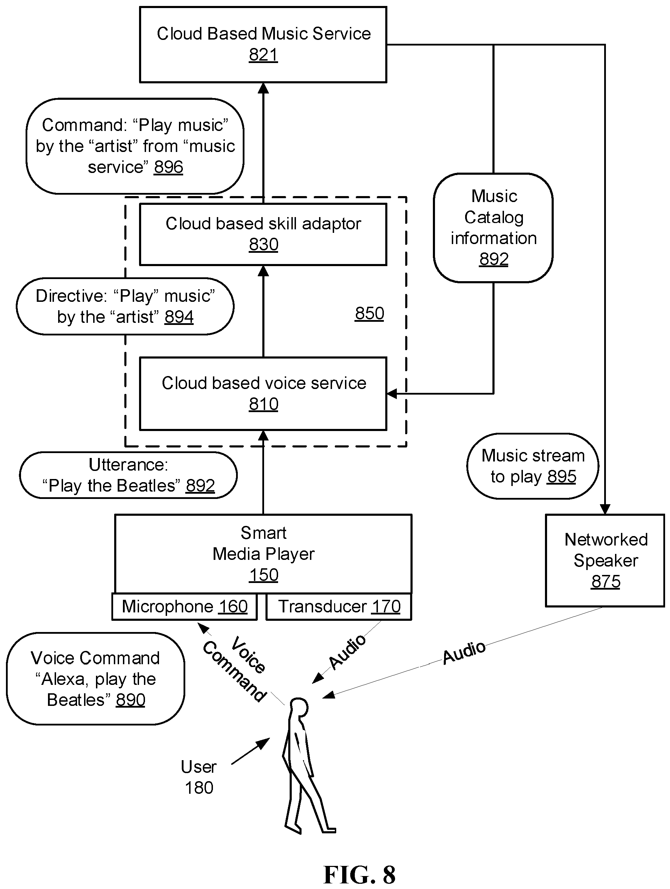

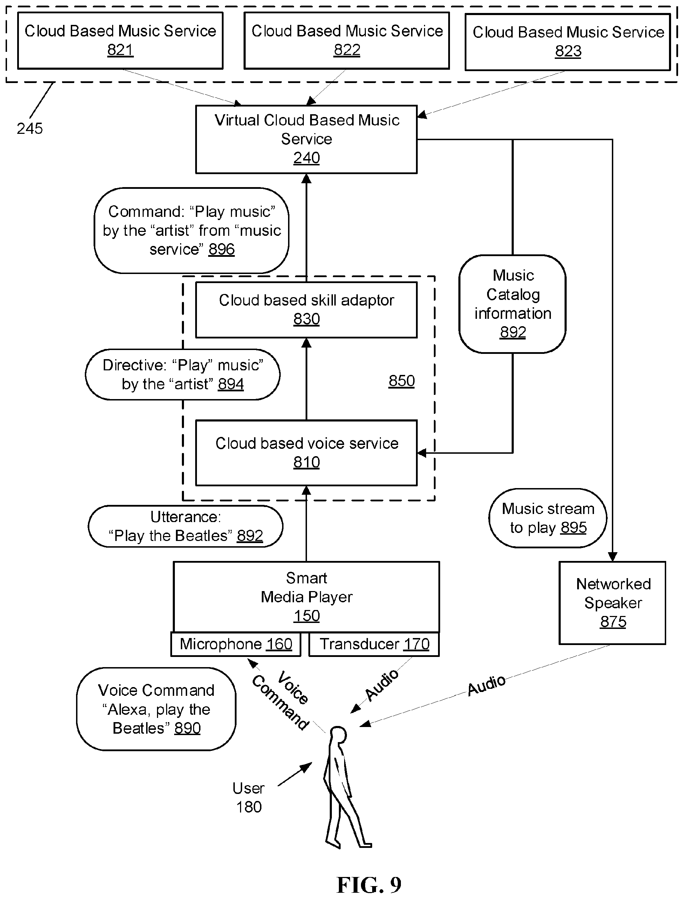

FIG. 8 is a diagram of how an existing cloud based voice assistant 850 is implemented without a virtual media service. FIG. 9 is a diagram of how existing voice based assistant handles voice commands for playing media using the virtual media service 240 under the first embodiment as per FIG. 2. For purposes of demonstration, the examples refer to the cloud based voice assistant 850 as "Alexa," although the process may be similar for other voice assistants. The following terms are used regarding the discussion of FIGS. 8 and 9:
**Cloud based voice service 810:** A service that understands a user voice command and converts the voice command into a message that is sent to a cloud based skill adaptor 830.
**Cloud based skill adaptor 830:** Code and configuration that interprets messages received from the cloud based voice service 810, and communicates with a cloud based music service 821 (FIG. 8) or a virtual cloud based music service 240 (FIG. 9).
**Cloud based music service 821-823:** A cloud environment that manages users and media content for a specific media (music) streaming service.
**Music stream to play 895:** Audio content that is sent for playback on an Alexa-enabled device (here, the smart media player 150).
**Music Catalogs (not shown):** Files provided to the cloud based voice assistant containing information about the music content available to the user 180 through one or more cloud based music services 821-823 subscribed to by the user 180.

The following example scenario explains how an Alexa music skill system works. It should be noted the example includes Alexa specific commands which are included to explain the command flow-through, but are not part of the present invention:
A user 180 enables a music skill (for example, where the skill provides access to a cloud based music service 821 and the skill name corresponds to the name of a cloud based music service 821) and then speaks the voice command 890, "Alexa, play The Beatles on *skill name"* to his or her Alexa-enabled device, here the smart media player 150.
The smart media player 150 hears this utterance 890 and sends it to the cloud based voice service 810 for interpretation.
The cloud based voice service 810 interprets the *action* as "play". It composes a directive 894, such as a JSON message (for example, a GetPlayableContent API request) and sends the directive 894to the cloud based skill adaptor 830 for the cloud based skill adaptor 830 to determine if there is music or audio available to satisfy the user's utterance.
The GetPlayableContent request includes:
- An action (for example, "resolve to playable content").
- A list of resolved entities (for example, artist, album, track, etc.) that were found in the music partner's catalog for that utterance.
- An OAuth 2.0 token authenticating the user (only for skills that have enabled account linking).

The cloud based skill adaptor 830 receives and parses the request for the action, the resolved entities, and authentication details. The cloud based skill adaptor 830 uses this information to communicate with the cloud based music service, for FIG. 8, or the virtual cloud based music service 240, for FIG. 9.
The cloud based skill adaptor 830 communicates with the cloud based music service, for FIG. 8, or the virtual cloud based music service 240, for FIG. 9 to determine what audio to return to satisfy the utterance of the user 180. The cloud based music service, for FIG. 8, or the virtual cloud based music service 240, for FIG. 9returns a content identifier representing the audio (music catalog information 892). In this example, the music catalog information 892 represent a playlist of popular songs by the Beatles.
The cloud based skill adaptor 830sends a GetPlayableContent response back to the cloud based voice service 810 indicating that the utterance of the user can be satisfied, and includes the identifier for the audio 892.
The Alexa service 850 sends an Initiate API request to the cloud based music service, for FIG. 8, or the virtual cloud based music service 240, for FIG. 9, indicating that playback of the audio content should start. The cloud based music service, for FIG. 8, or the virtual cloud based music service 240, for FIG. 9 returns an Initiate response containing the first playable track to the Alexa service 850.
The Alexa service 850 translates the Initiate response into a response on the smart media player 150 and/or an associate networked speaker 875. For example, Alexa might say, "Playing popular songs by The Beatles." Alexa then queues the first track on the smart media player 150 software for immediate playback.
When the first track is almost done playing on the smart media player 150, the Alexa service requests the next track from the cloud based skill adaptor 830 using a GetNextItem API request. The cloud based skill adaptor 830 returns another playable track to the Alexa service, which is sent to the smart media player 150 for playback. This process repeats until the cloud based skill adaptor 830, in response to a request for the next track, indicates there are no more tracks to play.

From the perspective of the cloud based voice assistant 850, the processes shown in FIG. 8 (dedicated cloud based music service) and FIG. 9 (virtual cloud based music service) are at least similar, and in some cases identical. In the case of FIG. 9, the virtual cloud based music service 240 takes the additional steps of managing multiple cloud based music services 821-823, and determining which of the cloud based music services 821-823 to use for responding to each command 896, as described previously (see FIGS. 6-7).

It will be apparent to those skilled in the art that various modifications and variations can be made to the structure of the present invention without departing from the scope of the invention. For example, FIG. 10 shows an alternative embodiment where a voice agent enabled device 851 with a microphone 860 receives the voice utterance 190 identifying a separate media player 852 with at least one transducer 870 as the target device to render the media stream 195. Instead of the voice agent 110, the virtual media service 240 may forward the media service link 191 and the metadata 192 to the media player 852. It should be noted that the media player 952 may be a grouping of one or more media rendering devices, for example, a stereo pair of speakers with (or without) a video display, a subwoofer, surround speakers, et cetera.

In view of the foregoing, it is intended that the present invention cover modifications and variations of this invention provided they fall within the scope of the following claims .

## Claims

1. A method for accessing a media program from a media service (121-128) of a plurality of aggregated media services (145, 245) by a voice agent (110), comprising the steps of:
receiving an identifier for the media program (194) from the voice agent (110);
where the identifier is received via a voice agent application programming interface, API, where the voice agent API is one of a store of voice agent APIs allowing interaction with different voice agents;
providing access to the plurality of aggregated media services through a single virtual media service, VMS;
accessing a VMS media services API store, which stores a VMS media service API for each of the plurality of aggregated media services, each VMS media service API configured to allow the VMS to interact with a particular media service of the plurality of aggregated media services;
selecting a first media service (121) from the plurality of aggregated media services (145, 245) within the VMS API store;
querying the first media service (121) for the media program via use of the identifier for the media program (194); and
receiving a first response from the first media service (121) comprising one of the group consisting of access information (191, 192) for the media program and a fail status indicating that the media program is not available and/or suitable from the first media service (121),
wherein selecting the first media service (121) from the plurality of aggregated media services (145, 245) further comprises the steps of:
accessing a priority preference for the plurality of aggregated media services (145, 245), which is a ranking of the media services of the aggregated media services (145, 245); and
selecting the first media service (121) according to the priority preference.

2. The method of claim 1, wherein the voice agent (110) does not have an API for the first media service (121).

3. The method of claim 1, further comprising the steps of:
if the first response is a fail status, selecting a second media service (122) from the plurality of aggregated media services (145, 245); and
querying the second media service (122) for the media program,
wherein the second media service (122) is different from the first media service (121).

4. The method of claim 1, further comprising the step of:
sending the access information for the media program to the voice agent (110)**.**

5. The method of claim 3, wherein selecting the second media service (122) from the plurality of aggregated media services (145, 245) further comprises the step of selecting the second media service (122) according to the priority preference.

6. The method of claim 3, further comprising the steps of:
accessing a first media service API (135) for the first media
service (125);
formatting the querying of the first media service (125) according to the first media service API (135); and
interpreting the first response according to the first media service API (135).

7. The method of claim 6, further comprising the steps of:
accessing a second media service API (134) for the second media service (124); and
formatting the querying of the second media service (124) according to the second media service API (134).

8. The method of claim 7, further comprising the step of:
receiving a second response from the second media service (124); and interpreting the second response according to the second media service API (134).

9. The method of claim 1, further comprising the step of converting, by the voice agent (110), a voice utterance (190) into the identifier for the media program (194).

10. The method of claim 1, further comprising the step of accessing the voice agent API corresponding to the voice agent (110).

11. The method of claim 1, further comprising the step of selecting, by the voice agent (110), the virtual media service (240) as a default media service.

12. The method of claim 1, further comprising the steps of:
selecting a second media service (122) from the plurality of aggregated media services (145, 245);
querying the second media service (122) for the media program;
receiving a second response from the second media service (122) comprising one of the group consisting of access information (191, 192) for the media program and a fail status indicating that the media program is not available and/or suitable from the second media service (122);
selecting the first or second media service (121, 122) according to the first response and the second response based on a predetermined selection criteria; and
providing the access information for the media program and the description of the media program from the selected media service to the media rendering device.

13. The method of claim 12, wherein the access information (191, 192) comprises means for the media rendering device to receive the media program from the selected media service.

14. A virtual media service (240), VMS, in communication with a voice agent (110), a first media service (121), a second media service (122), and a media rendering device, comprising:
a processor (502) and a memory (506) configured to store non-transient instructions that, when executed by the processor, perform the steps of:
receiving an identifier for a media program (194) from the voice agent (110), where the identifier is received via a voice agent application programming interface, API, where the voice agent API is one of a store of voice agent APIs allowing interaction with different voice agents;
accessing a VMS media services API store, which is configured to store a VMS media service API for each of the first media service and the second media service, each VMS media service API configured to allow the VMS to interact with the corresponding media service of the first media service and the second media service;
querying the first media service (121) and the second media service (122) for the media program via use of the identifier for the media program (194);
receiving a response from the first and/or second media service (121, 122) comprising access information (191, 192) for the media program;
selecting the first or second media service (121, 122) according to the response from the first and/or second media service (121, 122) based on a predetermined selection criteria; and
providing the access information (191, 192) for the media program from the selected media service to the media rendering device,
wherein selecting the first or second media service (121, 122) further comprises the steps of:
accessing a priority preference for a plurality of aggregated media services (145, 245), which is a ranking of the media services of the aggregated media services (145, 245); and
selecting the first or second media service (121, 122) according to the priority preference.

15. The virtual media service according to claim 14, wherein the voice agent (110) does not have an API for the first media service (121).

## Patentansprüche

1. Verfahren zum Zugreifen auf ein Medienprogramm von einem Mediendienst (121-128) aus einer Vielzahl von aggregierten Mediendiensten (145, 245) durch einen Sprachagenten (110), umfassend die folgenden Schritte:
Empfangen eines Identifikators für das Medienprogramm (194) von dem Sprachagenten (110); wobei der Identifikator über eine Sprachagenten-Anwendungsprogrammierschnittstelle, API, empfangen wird, wobei die Sprachagenten-API eine aus einem Speicher von Sprachagenten-APls ist, die eine Interaktion mit verschiedenen Sprachagenten ermöglicht;
Bereitstellen von Zugriff auf die Vielzahl von aggregierten Mediendiensten durch einen einzelnen virtuellen Mediendienst, VMS;
Zugreifen auf einen VMS-Mediendienste-API-Speicher, der eine VMS-Mediendienst-API für jeden aus der Vielzahl von aggregierten Mediendiensten speichert, wobei jede VMS-Mediendienst-API ausgelegt ist, um zu ermöglichen, dass der VMS mit einem bestimmten Mediendienst aus der Vielzahl von aggregierten Mediendiensten interagiert;
Auswählen eines ersten Mediendiensts (121) aus der Vielzahl von aggregierten Mediendiensten (145, 245) innerhalb des VMS-API-Speichers;
Abfragen des ersten Mediendiensts (121) für das Medienprogramm über die Nutzung des Identifikators für das Medienprogramm (194); und
Empfangen einer ersten Antwort von dem ersten Mediendienst (121), umfassend eine aus der Gruppe bestehend aus Zugriffsinformationen (191, 192) für das Medienprogramm und einen Ausfallstatus, der angibt, dass das Medienprogramm nicht verfügbar und/oder nicht geeignet ist, von dem ersten Mediendienst (121),
wobei das Auswählen des ersten Mediendiensts (121) aus der Vielzahl von aggregierten Mediendiensten (145, 245) ferner die folgenden Schritte umfasst:
Zugreifen auf eine Prioritätspräferenz für die Vielzahl von aggregierten Mediendiensten (145, 245), die eine Reihung der Mediendienste der aggregierten Mediendienste (145, 245) ist; und
Auswählen des ersten Mediendiensts (121) gemäß der Prioritätspräferenz.

2. Verfahren nach Anspruch 1, wobei der Sprachagent (110) keine API für den ersten Mediendienst (121) aufweist.

3. Verfahren nach Anspruch 1, das ferner die folgenden Schritte umfasst:
falls die erste Antwort ein Ausfallstatus ist, Auswählen eines zweiten Mediendiensts (122) aus der Vielzahl von aggregierten Mediendiensten (145, 245); und
Abfragen des zweiten Mediendiensts (122) nach dem Medienprogramm,
wobei sich der zweite Mediendienst (122) von dem ersten Mediendienst (121) unterscheidet.

4. Verfahren nach Anspruch 1, das ferner den folgenden Schritt umfasst:
Senden der Zugriffsinformationen für das Medienprogramm an den Sprachagenten (110).

5. Verfahren nach Anspruch 3, wobei das Auswählen des zweiten Mediendiensts (122) aus der Vielzahl von aggregierten Mediendiensten (145, 245) ferner den Schritt des Auswählens des zweiten Mediendiensts (122) gemäß der Prioritätspräferenz umfasst.

6. Verfahren nach Anspruch 3, das ferner die folgenden Schritte umfasst:
Zugreifen auf eine erste Mediendienst-API (135) für den ersten Mediendienst (125);
Formatieren des Abfragens des ersten Mediendiensts (125) gemäß der ersten Mediendienst-API (135); und
Interpretieren der ersten Antwort gemäß der ersten Mediendienst-API (135).

7. Verfahren nach Anspruch 6, das ferner die folgenden Schritte umfasst:
Zugreifen auf eine zweite Mediendienst-API (134) für den zweiten Mediendienst (124); und
Formatieren des Abfragens des zweiten Mediendiensts (124) gemäß der zweiten Mediendienst-API (134).

8. Verfahren nach Anspruch 7, das ferner den folgenden Schritt umfasst:
Empfangen einer zweiten Antwort von dem zweiten Mediendienst (124); und Interpretieren der zweiten Antwort gemäß der zweiten Mediendienst-API (134).

9. Verfahren nach Anspruch 1, das ferner den Schritt des Konvertierens einer Sprachäußerung (190) zu dem Identifikator für das Medienprogramm (194) durch den Sprachagenten (110) umfasst.

10. Verfahren nach Anspruch 1, das ferner den Schritt des Zugreifens auf die Sprachagenten-API, die dem Sprachagenten (110) entspricht, umfasst.

11. Verfahren nach Anspruch 1, das ferner den Schritt des Auswählens des virtuellen Mediendiensts (240) als Standard-Mediendienst durch den Sprachagenten (110) umfasst.

12. Verfahren nach Anspruch 1, das ferner die folgenden Schritte umfasst:
Auswählen eines zweiten Mediendiensts (122) aus der Vielzahl von aggregierten Mediendiensten (145, 245);
Abfragen des zweiten Mediendiensts (122) für das Medienprogramm;
Empfangen einer zweiten Antwort von dem zweiten Mediendienst (122), umfassend eines aus der Gruppe bestehend aus Zugriffsinformationen (191, 192) für das Medienprogramm und einen Ausfallstatus, der angibt, dass das Medienprogramm nicht verfügbar und/oder geeignet ist, von dem zweiten Mediendienst (122);
Auswählen des ersten oder zweiten Mediendiensts (121, 122) gemäß der ersten Antwort und der zweiten Antwort basierend auf einem vorbestimmten Auswahlkriterium; und
Bereitstellen der Zugriffsinformationen für das Medienprogramm und der Beschreibung des Medienprogramms von dem ausgewählten Mediendienst an dem Medienwiedergabegerät.

13. Verfahren nach Anspruch 12, wobei die Zugriffsinformationen (191, 192) ein Mittel für das Medienwiedergabegerät zum Empfangen des Medienprogramms von dem ausgewählten Mediendienst umfasst.

14. Virtueller Mediendienst (240), VMS, in Kommunikation mit einem Sprachagenten (110), einem ersten Mediendienst (121), einem zweiten Mediendienst (122) und einem Medienwiedergabegerät, umfassend:
einen Prozessor (502) und einen Speicher (506), der ausgelegt ist, um nichtflüchtige Befehle zu speichern, die, wenn sie durch den Prozessor ausgeführt werden, die folgenden Schritte durchführen:
Empfangen eines Identifikators für ein Medienprogramm (194) von dem Sprachagenten (110), wobei der Identifikator über eine Sprachagenten-Anwendungsprogrammierschnittstelle, API, empfangen wird, wobei die Sprachagenten-API eine aus einem Speicher von Sprachagenten-APls ist, die eine Interaktion mit verschiedenen Sprachagenten ermöglicht;
Zugreifen auf einen VMS-Mediendienste-API-Speicher, der ausgelegt ist, um eine VMS-Mediendienst-API für jeden aus dem ersten Mediendienst und dem zweiten Mediendienst zu speichern, wobei jede VMS-Mediendienst-API ausgelegt ist, um zu ermöglichen, dass der VMS mit dem entsprechenden Mediendienst aus dem ersten Mediendienst und dem zweiten Mediendienst interagiert;
Abfragen des ersten Mediendiensts (121) und des zweiten Mediendiensts (122) für das Medienprogramm über die Nutzung des Identifikators für das Medienprogramm (194);
Empfangen einer Antwort von dem ersten und/oder dem zweiten Mediendienst (121, 122), umfassend Zugriffsinformationen (191, 192) für das Medienprogramm;
Auswählen des ersten oder des zweiten Mediendiensts (121, 122) gemäß der Antwort von dem ersten und/oder zweiten Mediendienst (121, 122) basierend auf einem ausgewählten Auswahlkriterium; und
Bereitstellen der Zugriffsinformationen (191, 192) für das Medienprogramm von dem ausgewählten Mediendienst an dem Medienwiedergabegerät,
wobei das Auswählen des ersten oder zweiten Mediendiensts (121, 122) ferner die folgenden Schritte umfasst:
Zugreifen auf eine Prioritätspräferenz für eine Vielzahl von aggregierten Mediendiensten (145, 245), die eine Reihung der Mediendiensten der aggregierten Mediendienste (145, 245) ist; und
Auswählen des ersten oder zweiten Mediendiensts (121, 122) gemäß der Prioritätspräferenz.

15. Virtueller Mediendienst nach Anspruch 14, wobei der Sprachagent (110) keine API für den ersten Mediendienst (121) aufweist.

## Revendications

1. Procédé pour accéder à un programme multimédia à partir d'un service multimédia (121-128) d'une pluralité de services multimédia agrégés (145, 245) par l'intermédiaire d'un agent vocal (110), comprenant les étapes consistant à :
recevoir un identifiant pour le programme multimédia (194) à partir de l'agent vocal (110) ;
l'identifiant étant reçu via une interface de programmation d'application d'agent vocal, API,
l'API d'agent vocal est l'une d'un magasin d'API d'agent vocal permettant une interaction avec différents agents vocaux ;
fournir un accès à la pluralité de services multimédias agrégés par le biais d'un service multimédia virtuel, VMS, unique ;
accéder à un magasin d'API de services multimédias VMS, qui stocke une API de service multimédia VMS pour chacun de la pluralité de services multimédias agrégés, chaque API de service multimédia VMS étant configurée pour permettre au VMS d'interagir avec un service multimédia particulier de la pluralité de services multimédias agrégés ;
sélectionner un premier service multimédia (121) parmi la pluralité de services multimédias agrégés (145, 245) à l'intérieur du magasin d'API VMs ;
interroger le premier service multimédia (121) pour le programme multimédia via l'utilisation de l'identifiant pour le programme multimédia (194) ; et
recevoir une première réponse du premier service multimédia (121) comprenant l'un du groupe comprenant des informations d'accès (191, 192) pour le programme multimédia et un état d'échec indiquant que le programme multimédia n'est pas disponible et/ou approprié à partir du premier service multimédia (121),
dans lequel la sélection du premier service multimédia (121) parmi la pluralité de services multimédias agrégés (145, 245) comprend en outre les étapes consistant à :
accéder à une préférence de priorité pour la pluralité de services multimédias agrégés (145, 245), qui est un classement des services multimédias des services multimédias agrégés (145, 245) ; et
sélectionner le premier service multimédia (121) en fonction de la préférence de priorité.

2. Procédé selon la revendication 1, dans lequel l'agent vocal (110) ne présente pas d'API pour le premier service multimédia (121).

3. Procédé selon la revendication 1, comprenant en outre les étapes consistant à :
si la première réponse est un état d'échec, sélectionner un second service multimédia (122) parmi la pluralité de services multimédias agrégés (145, 245) ; et
interroger le second service multimédia (122) pour le programme multimédia,
dans lequel le second service multimédia (122) est différent du premier service multimédia (121).

4. Procédé selon la revendication 1, comprenant en outre l'étape consistant à :
envoyer les informations d'accès pour le programme multimédia à l'agent vocal (110).

5. Procédé selon la revendication 3, dans lequel la sélection du second service multimédia (122) parmi la pluralité de services multimédias agrégés (145, 245) comprend en outre l'étape consistant à sélectionner le second service multimédia (122) selon la préférence de priorité.

6. Procédé selon la revendication 3, comprenant en outre les étapes consistant à :
accéder à une API de premier service multimédia (135) pour le premier service multimédia (125) ;
formater l'interrogation du premier service multimédia (125) selon l'API de premier service multimédia (135) ; et
interpréter la première réponse selon l'API de premier service multimédia (135).

7. Procédé selon la revendication 6, comprenant en outre les étapes consistant à :
accéder à une API de second service multimédia (134) pour le second service multimédia (124) ; et
formater l'interrogation du second service multimédia (124) selon l'API de second service multimédia (134).

8. Procédé selon la revendication 7, comprenant en outre l'étape consistant à :
recevoir une seconde réponse du second service multimédia (124) ; et interpréter la seconde réponse selon l'API de second service multimédia (134).

9. Procédé selon la revendication 1, comprenant en outre l'étape consistant à convertir, par l'intermédiaire de l'agent vocal (110), un énoncé vocal (190) en l'identifiant pour le programme multimédia (194).

10. Procédé selon la revendication 1, comprenant en outre l'étape consistant à accéder à l'API d'agent vocal correspondant à l'agent vocal (110).

11. Procédé selon la revendication 1, comprenant en outre l'étape consistant à sélectionner, par l'intermédiaire de l'agent vocal (110), le service multimédia virtuel (240) en tant que service multimédia par défaut.

12. Procédé selon la revendication 1, comprenant en outre les étapes consistant à :
sélectionner un second service multimédia (122) parmi la pluralité de services multimédias agrégés (145, 245) ;
interroger le second service multimédia (122) pour le programme multimédia ;
recevoir une seconde réponse du second service multimédia (122) comprenant l'un du groupe constitué d'informations d'accès (191, 192) pour le programme multimédia et d'un état d'échec indiquant que le programme multimédia n'est pas disponible et/ou approprié à partir du second service multimédia (122) ;
sélectionner le premier ou le second service multimédia (121, 122) en fonction de la première réponse et de la seconde réponse sur la base d'un critère de sélection prédéterminé ; et
fournir les informations d'accès au programme multimédia et la description du programme multimédia, du service multimédia sélectionné au dispositif de rendu multimédia.

13. Procédé selon la revendication 12, dans lequel les informations d'accès (191, 192) comprennent des moyens pour que le dispositif de rendu multimédia reçoive le programme multimédia en provenance du service multimédia sélectionné.

14. Service multimédia virtuel (240), VMS, en communication avec un agent vocal (110), un premier service multimédia (121), un second service multimédia (122), et un dispositif de rendu multimédia, comprenant :
un processeur (502) et une mémoire (506) configurés pour stocker des instructions non transitoires qui, lorsqu'elles sont exécutées par le processeur, exécutent les étapes consistant à :
recevoir un identifiant pour un programme multimédia (194) en provenance de l'agent vocal (110), l'identifiant étant reçu via une interface de programmation d'application, API, d'agent vocal, l'API d'agent vocal étant l'une d'une banque d'API d'agent vocal permettant une interaction avec différents agents vocaux ;
accéder à un magasin d'API de services multimédias VMS, qui est configuré pour stocker une API de service multimédia VMS pour chacun du premier service multimédia et du second service multimédia, chaque API de service multimédia VMS étant configurée pour permettre au VMs d'interagir avec le service multimédia correspondant du premier service multimédia et du second service multimédia ;
interroger le premier service multimédia (121) et le second service multimédia (122) pour le programme multimédia via l'utilisation de l'identifiant pour le programme multimédia (194) ;
recevoir une réponse du premier et/ou du second service multimédia (121, 122) comprenant des informations d'accès (191, 192) pour le programme multimédia ;
sélectionner le premier ou le second service multimédia (121, 122) en fonction de la réponse en provenance du premier et/ou du second service multimédia (121, 122) sur la base d'un critère de sélection prédéterminé ; et
fournir les informations d'accès (191, 192) pour le programme multimédia, du service multimédia sélectionné au dispositif de rendu multimédia,
dans lequel la sélection du premier ou du second service multimédia (121, 122) comprend en outre les étapes consistant à :
accéder à une préférence de priorité pour une pluralité de services multimédias agrégés (145, 245), qui est un classement des services multimédias des services multimédias agrégés (145, 245) ; et
sélectionner le premier ou le second service multimédia (121, 122) en fonction de la préférence de priorité.

15. Service multimédia virtuel selon la revendication 14, dans lequel l'agent vocal (110) ne possède pas d'API pour le premier service multimédia (121).
